# EUROPEAN PATENT SPECIFICATION

(11) **EP 3 174 237 B1**
(45) Date of publication and mention of the grant of the patent: **05.09.2018**
(21) Application number: 14884454.1
(22) Date of filing: 23.12.2014
(51) Int. Cl.: H04L 7/00, H04J 3/06

(54) **TIME SYNCHRONIZATION METHOD AND APPARATUS FOR NETWORK DEVICES AND TIME SYNCHRONIZATION SERVER**
ZEITSYNCHRONISATIONSVERFAHREN UND -VORRICHTUNG FÜR NETZWERKVORRICHTUNGEN UND ZEITSYNCHRONISATIONSSERVER
PROCÉDÉ ET APPAREIL DE SYNCHRONISATION TEMPORELLE POUR DISPOSITIFS RÉSEAU ET SERVEUR DE SYNCHRONISATION TEMPORELLE

(30) Priority: 25.07.2014 CN 201410360163
(43) Date of publication of application: 31.05.2017
(73) Proprietor: ZTE Corporation, Shenzhen, Guangdong 518057 (CN)
(72) Inventor: WANG, Lilin, Shenzhen Guangdong 518057 (CN); DENG, Yanping, Shenzhen Guangdong 518057 (CN); WANG, Yangfeng, Shenzhen Guangdong 518057 (CN); FU, Xiaoming, Shenzhen Guangdong 518057 (CN)
(74) Representative: HGF Limited
(86) International application number: PCT/CN2014/094716
(87) International publication number: WO 2015/131626

(56) References cited:
- CN-A- 101 420 225
- CN-A- 101 547 083
- CN-A- 102 404 103
- CN-A- 102 540 866
- CN-B- 102 547 969
- US-A1- 2009 013 330
- US-A1- 2012 014 377
- US-A1- 2014 177 653

## Description

### Technical Field

The present invention relates to the field of communication technology, and in particular to a time synchronization method and apparatus for network devices and a time synchronization server.

### Background

With the development of the Internet technology and application, increasingly strict requirements are proposed to the time synchronization between network devices. For example, many applications relating to the timestamp, such as various real-time online transactions, manufacturing process control, time configuration of the communication network, network security design, distributed network computing and processing, traffic route and air flight management, and database file management and call log all and the like, need precise, reliable and acknowledged time.

The time synchronization may be performed through various time synchronization protocols between the network devices, herein, a Network Time Protocol (NTP) is one commonly used. The NTP may synchronize the network devices to a server or a clock source (such as a quartz clock, a rubidium clock and a GPS, etc.) by estimating a round-trip delay time of an NTP data packet at the Ethernet, thereby providing highly precise time correction for the network devices. An SNTP is a simplified version of the NTP.

According to the network architecture of the system, receiving, parameter updating and sending of an NTP/SNTP message is generally performed at an application layer. But the operations of receiving and sending the message of the application layer all need to be implemented by a software interrupt drive of a Central Processing Unit (CPU). Therefore, limited by the interrupt response speed and frequency of the CPU system, the NTP/SNTP message processing is also slower. The problem of such insufficient capability to process the NTP/SNTP message of CPU appears particularly outstanding in the large-scale networking application of the femto (home Node B)/microcell and it fails to perform high-capacity and centralized time synchronization, which causes that the relevant femto/microcell networking scheme cannot furthest reduce the NTP/SNTP synchronization costs.

US 20120014377 A1 discloses a system handles timing information within a packet-switched network.

### Summary of the Invention

The present application provides a time synchronization method according to claim 1 and an apparatus for network devices according to claim 5 and a time synchronization server according to claim 9.

Also provided is a time synchronization method for network devices, which includes:
a programmable logic device receiving and parsing a time synchronization message from a to-be-synchronized device in a physical layer, herein the time synchronization message carries a synchronization parameter;
the programmable logic device generating a reply message for the time synchronization message according to local reference time and update configurations of the synchronization parameter; and
the programmable logic device sending the reply message and a link establishment and communication message sent to the to-be-synchronized device by a CPU to the to-be-synchronized device in a preset order.

Alternatively, a programmable logic device receiving and parsing a time synchronization message from a to-be-synchronized device in a physical layer includes:
the programmable logic device receiving and parsing time synchronization messages from different to-be-synchronized devices in the physical layer via at least two communication channels.

Alternatively, the programmable logic device generating a reply message for the time synchronization message according to local reference time and update configurations of the synchronization parameter includes:
the programmable logic device generating a corresponding reply message according to the local reference time and the update configurations of the CPU to the synchronization parameter in each communication channel respectively;
the programmable logic device sending the reply message and a link establishment and communication message sent to the to-be-synchronized device by a CPU to the to-be-synchronized device in a preset order includes:
   the programmable logic device receiving the link establishment and communication message sent to the to-be-synchronized device by the CPU via each communication channel respectively; and
   the programmable logic device sending the generated reply message and the received link establishment and communication message to the to-be-synchronized device in the preset order via each communication channel respectively.

Alternatively, the programmable logic device generating a reply message for the time synchronization message according to local reference time and update configurations of the synchronization parameter includes:
the programmable logic device acquiring local reference time from a primary clock board or a standby clock board;
the programmable logic device converting the local reference time into time service reference time; and
the programmable logic device generating the reply message for the time synchronization message according to the time service reference time and the update configurations.

Alternatively, the synchronization parameter includes a source address and a destination address of the time synchronization message;
the update configurations of the synchronization parameter includes: update configurations of the source address and the destination address, and precision update configurations of the reference time.

Also provided is a time synchronization apparatus for network devices, which includes:
a receiving and parsing unit, arranged to receive and parse a time synchronization message from a to-be-synchronized device in a physical layer, herein the time synchronization message carries a synchronization parameter;
a generation unit, arranged to generate a reply message for the time synchronization message according to local reference time and update configurations of the synchronization parameter; and
a sending unit, arranged to send the reply message and a link establishment and communication message sent to the to-be-synchronized device by a CPU to the to-be-synchronized device in a preset order.

Alternatively, the receiving and parsing unit is arranged to receive and parse time synchronization messages from different to-be-synchronized devices in the physical layer via at least two communication channels.

Alternatively, the generation unit is arranged to generate the reply message of the time synchronization message via the at least two communication channels according to the local reference time and the update configurations of the CPU to the synchronization parameter;
the sending unit includes:
a receiving module, arranged to receive the link establishment and communication message sent to the to-be-synchronized device by the CPU via each communication channel respectively; and
a sending module, arranged to send the generated reply message and the received link establishment and communication message to the to-be-synchronized device in the preset order via each communication channel respectively.

Alternatively, the generation unit includes:
an acquisition module, arranged to acquire local reference time from a primary clock board or a standby clock board;
a conversion module, arranged to convert the local reference time into time service reference time; and
a generation module, arranged to generate the reply message for the time synchronization message according to the time service reference time and the update configurations.

Also provided is a time synchronization server, which includes a primary clock board, a standby clock board and at least one expansion board, herein the primary clock board, the standby clock board and the expansion board all include a CPU and the above time synchronization apparatus.

Also provided is a computer program, which includes program instructions, herein, when the program instructions are executed by a programmable logic device, the programmable logic device may execute the method as mentioned above.

The embodiment of the present invention provides a carrier carrying the above computer program.

With the time synchronization method and apparatus and the time synchronization server provided in the embodiments of the present invention, time synchronization message receiving, parameter updating and reply message sending are implemented at the PHY layer through the programmable logic, and the CPU performs simple configurations to the time synchronization message and system link establishment. Therefore, various processing processes of the time synchronization message are all performed without going through the interrupt programs of the CPU, which effectively avoids the problem of insufficient message processing capability caused by the CPU architecture limitations, thereby facilitating performing high-capacity and centralized time synchronization and greatly reducing the time synchronization costs.

### Brief Description of Drawings

FIG. 1 is a flow diagram of a time synchronization method for network devices provided in an embodiment of the present invention.
FIG. 2 is a structure diagram of a time synchronization apparatus for network devices provided in an embodiment of the present invention.
FIG. 3 is a structure diagram of a time synchronization server provided in an embodiment of the present invention.
FIG. 4 is a structure diagram of a single board in the time synchronization server provided in an embodiment of the present invention.

### Preferred Embodiments of the Present Invention

The embodiments of the present invention will be described in detail in combination with the accompanying drawings below. It should be understood that the specific embodiments described here are only used to explain the present invention, which does not limit the present invention.

### Embodiment 1

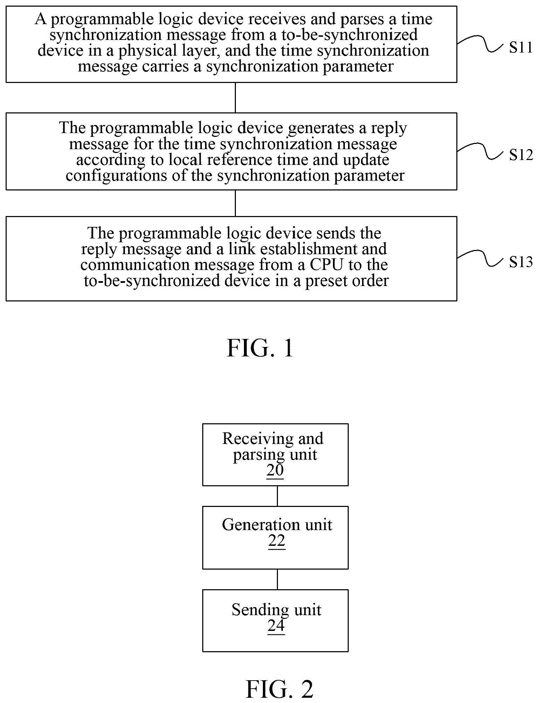

As shown in FIG. 1, an embodiment of the present invention provides a time synchronization method for network devices, and the following steps are included.

In step S11, a programmable logic device receives and parses a time synchronization message from a to-be-synchronized device in a physical layer, and the time synchronization message carries a synchronization parameter.

In step S12, the programmable logic device performs parameter updating according to local reference time and the synchronization parameter, and generates a reply message for the time synchronization message.

In step S13, the programmable logic device sends the reply message and a link establishment and communication message sent to the to-be-synchronized device by a CPU to the to-be-synchronized device in a preset order.

With the time synchronization method provided in the embodiment of the present invention, time synchronization message receiving, parameter updating and reply message sending are implemented at the PHY layer through the programmable logic, and the CPU processes the link establishment and communication message. Therefore, various processing processes of the time synchronization message are all performed without going through the interrupt programs of the CPU, which effectively avoids the problem of insufficient message processing capability caused by the CPU architecture limitations, thereby facilitating performing high-capacity and centralized time synchronization and greatly reducing the time synchronization costs.

Alternatively, in the step S11, it is required to receive and parse the time synchronization message from the to-be-synchronized device. But different from the traditional way, in the embodiment, receiving and parsing the time synchronization message is not completed by the CPU but by the programmable logic device. Alternatively, the programmable logic devices may be various chips or circuit modules with a data processing function, such as a Complex Programmable Logic Device (CPLD), a Field-Programmable Gate Array (FPGA) and a Digital Signal Processor (DSP) and so on. All these programmable logic devices normally have a parallel data processing capability, which can efficiently process the time synchronization message at a specific circuit design layer and a physical layer of the protocol. Meanwhile, the received time synchronization message also carries a plurality of synchronization parameters, such as message sending time with the time of the to-be-synchronized device as a reference, and a source address and a destination address of the message and so on, so that certain basic information of the to-be-synchronized device is transferred to the programmable logic device.

In the step S12, the programmable logic device needs to perform synchronization parameter updating on the time synchronization message parsed in the step S11 and generate the reply message for the time synchronization message. Alternatively, a data structure of the reply message may be identical with that of the time synchronization message but only different in certain specific parameter settings. For example, the time synchronization message may carry message sending time with the time of the to-be-synchronized device as a reference, and a source address and a destination address of the message and so on, but the reply message may carry time synchronization message receiving time with the local reference time as a reference, reply message sending time with the local reference time as a reference, and a source address and a destination address of the reply message and so on. Herein, the local reference time is a time considered to be accurate in the network device, and times of other network devices all need to be calibrated with the time. Alternatively, the local reference time may be a local accurate crystal oscillator time or a time from a Global Navigation Satellite System (GNSS) or a Building Integrated Timing Supply (BITS) system, which is not limited in the embodiments of the present invention. However, the local reference time acquired from a primary clock board or a standby clock board by the programmable logic device is not directly sent to the to-be-synchronized device, but it is firstly required to be converted into a time service reference time such as an NTP time and then is used as a time synchronization standard. Certainly, the time synchronization message may also be messages in other forms besides the NTP/SNTP, which is not limited in the embodiments of the present invention. For example, in one embodiment of the present invention, the programmable logic device generating a reply message for the time synchronization message according to local reference time and update configurations of the synchronization parameter includes the following steps: the programmable logic device acquiring local reference time from a primary clock board or a standby clock board; the programmable logic device converting the local reference time into time service reference time; and the programmable logic device generating the reply message for the time synchronization message according to the time service reference time and the update configurations.

The programmable logic device may acquire the local reference time from the primary clock board or the standby clock board, and convert the local reference time into the time service reference time, and then update the time service reference time to the synchronization parameter to serve as contents in the reply message. For a group of the time synchronization message and the reply message corresponding to the time synchronization message, the source address of the time synchronization message is the destination address of the reply message, and the destination address of the time synchronization message is the source address of the reply message.

Alternatively, the programmable logic device may also add new fields into the synchronization parameter as needed to perfect the time synchronization operation. For example, in one embodiment of the present invention, the programmable logic device also acquires a precision of the reference time while acquiring the local reference time, when the synchronization parameter updating is performed, the precision of the local reference time may be taken as an additional field to be added into the synchronization parameter, so that the to-be-synchronized device acquires its time precision.

It should be noted that, even though the programmable logic device can process affairs related to message transceiving and parameter updating and the like, the update configurations of relevant parameters and the regular link establishment and communication with the to-be-synchronized device also need the participation of the CPU. That is to say, besides the programmable logic device will send the reply message to the to-be-synchronized device, the CPU will also regularly send a small number of link establishment and communication messages to the to-be-synchronized device. Thus it is required to arbitrate a sending sequential order of the messages so as to optimize the capability of processing the time synchronization message.

The above embodiment describes the whole process of that the programmable logic device processing the time synchronization message. Alternatively, the programmable logic device may be provided with two or more communication channels, the programmable logic device may receive and parse time synchronization messages from different to-be-synchronized devices at the physical layer via the communication channels, thus parallel time synchronization may be performed on a plurality of to-be-synchronized devices, which greatly improves the efficiency of receiving and parsing the time synchronization message.

Correspondingly, in the step S12, the programmable logic device generating a reply message for the time synchronization message according to local reference time and update configurations of the synchronization parameter may include: the programmable logic device generating a corresponding reply message according to the local reference time and the update configurations of the CPU to the synchronization parameter in each communication channel respectively. Correspondingly, in the step S13, the programmable logic device sending the reply message and a link establishment and communication message sent to the to-be-synchronized device by a CPU to the to-be-synchronized device in a preset order may include: the programmable logic device receiving the link establishment and communication message sent to the to-be-synchronized device by the CPU via each communication channel respectively; and the programmable logic device sending the generated reply message and the received link establishment and communication message to the to-be-synchronized device in the preset order via each communication channel respectively. For example, in one embodiment of the present invention, the CPU is required to send a link establishment and communication message for one time to each to-be-synchronized device every other 5 minutes, thus each communication channel of the programmable logic device may receive the link establishment and communication message from the CPU first, and then sends the link establishment and communication message for one time to each to-be-synchronized device every other 5 minutes, but the time synchronization message may be sent in all other times. Therefore, since the CPU does not process the time synchronization message but only process the link establishment and communication message, the workload is greatly reduced, thus CPU resources may be utilized to support NTP/SNTP packet sending functions of multiple channels, so that signaling messages of the multiple channels are converged to the CPU by exchanging to perform link establishment and communication, and the NTP/SNTP packet sending capacity of the system is also correspondingly increased multiple times, which effectively improves the ability of performing high-capacity and centralized time synchronization.

Correspondingly, the embodiment of the present invention further provides a time synchronization apparatus for network devices, and as shown in FIG. 2, the apparatus includes:
a receiving and parsing unit 20, arranged to receive and parse a time synchronization message from a to-be-synchronized device in a physical layer, herein the time synchronization message carries a synchronization parameter;
a generation unit 22, arranged to perform parameter updating according to local reference time and the synchronization parameter and generate a reply message for the time synchronization message; and
a sending unit 24, arranged to send the reply message and a link establishment and communication message sent to the to-be-synchronized device by a CPU to the to-be-synchronized device in a preset order.

The time synchronization apparatus, the receiving and parsing unit 20, the generation unit 22 and the sending unit 24 provided in the embodiment of the present invention respectively implement the time synchronization message receiving, parameter updating and reply message sending at the PHY layer through the programmable logic device, and the CPU processes the link establishment and communication message. Therefore, various processing processes of the time synchronization message are all performed without going through the interrupt programs of the CPU, which effectively avoids the problem of insufficient message processing capability caused by the CPU architecture limitations, thereby facilitating performing high-capacity and centralized time synchronization and greatly reducing the time synchronization costs.

Alternatively, the receiving and parsing unit 20 may be arranged to receive and parse time synchronization messages from different to-be-synchronized devices in the physical layer via at least two communication channels. The generation unit 22 may be arranged to generate the reply message of the time synchronization message via the at least two communication channels according to the local reference time and the update configurations of the CPU to the synchronization parameter. The sending unit 24 may include: a receiving module, arranged to receive the link establishment and communication message sent to the to-be-synchronized device by the CPU via each communication channel respectively; and a sending module, arranged to send the generated reply message and the received link establishment and communication message to the to-be-synchronized device in the preset order via each communication channel respectively.

Alternatively, the generation unit 22 may include: an acquisition module, arranged to acquire local reference time from a primary clock board or a standby clock board; a conversion module, arranged to convert the local reference time into time service reference time; and a generation module, arranged to generate the reply message for the time synchronization message according to the time service reference time and the update configurations.

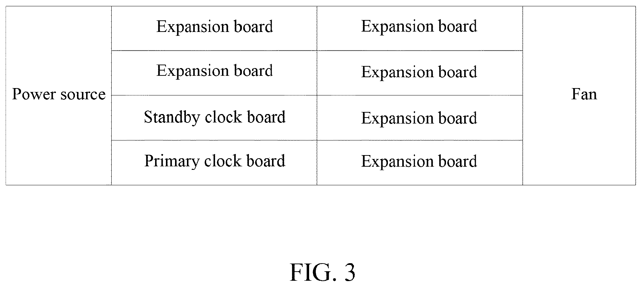

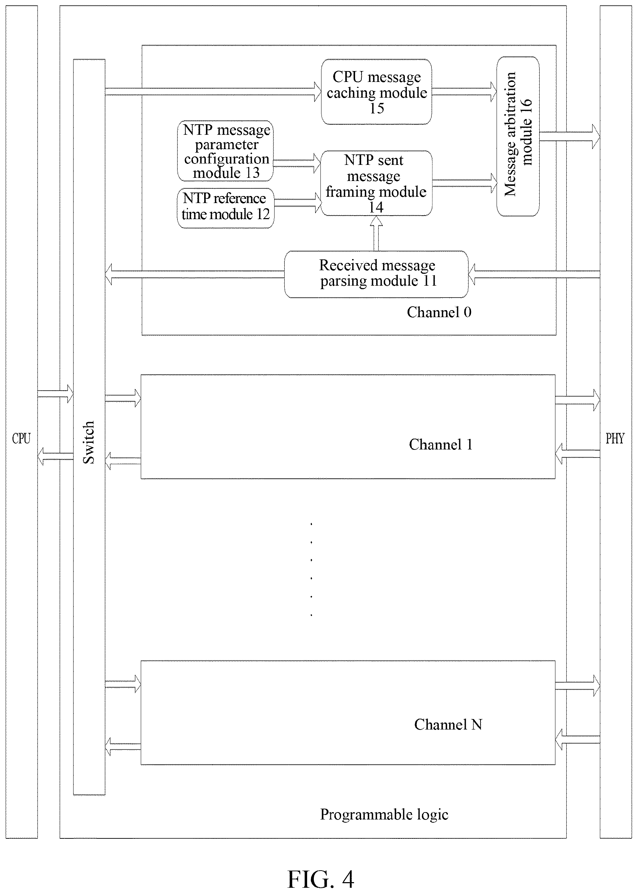

Correspondingly, the embodiment of the present invention further provides a time synchronization server, and as shown in FIG. 3, a primary clock board, a standby clock board and at least one expansion board are included, the primary clock board, the standby clock board and the expansion board include a CPU and the above time synchronization apparatus, and a structure of the single board (the primary clock board, the standby clock board or the expansion board) in the time synchronization server may be as shown in FIG. 4. In FIG. 4, a parsed message parsing module 11 corresponds to the receiving and parsing unit 20 of the time synchronization apparatus; an NTP reference time module 12, an NTP message parameter configuration module 13 and an NTP sent message framing module 14 correspond to the generation unit 22 of the time synchronization apparatus; and a message arbitration module 16 corresponds to the sending unit 24 of the time synchronization apparatus.

In combination with FIG. 3 and FIG. 4, the local reference time on the primary clock board and the standby clock board may be transferred to each expansion board through wiring within the machine frame, each expansion board may also have N channels, thus the time synchronization server provided in the embodiment can be provided for a large number of users to access through such single board expansion and channel expansion.

Herein, the received message parsing module 11 completes parsing the currently received message and extracts NTP message information. The extracted NTP message information is used as basic information of a to-be-replied message for the NTP message framing module 14 to complete NTP message framing.

The NTP reference time module 12 finishes an operation of NTP reference time through a local clock and a clock source (such as a GNSS or a BITS, etc.), and provides the reference time to the sent message processing module 14 to serve as receiving timestamp and sending timestamp information of the NTP message, and completes the sending.

The NTP message parameter configuration module 13 completes sending and configuration of the NTP message parameters via a CPU adaptive interface. Configuration information is used for the NTP message framing module 14 to complete the NTP message framing.

The NTP message framing module 14 performs framing according to the NTP message information parsed by the received message parsing module 11, the NTP reference time generated by the NTP reference time module 12, the NTP message information generated by the NTP message parameter configuration module 13, and the protocol requirements.

A CPU message caching module 15 is used for caching messages, used for link establishment and communication, of the CPU, for the message arbitration module 16 to arbitrate and send.

The message arbitration module 16 arbitrates the messages of the NTP/SNTP message framing module 14 and the CPU message caching module 15 according to information including priorities, and completes sending the messages according to the priorities.

The connection between N Ethernet channels and the CPU is completed by a switching module, so as to construct the link establishment and communication between each channel and the CPU system.

Link establishment and communication messages received by all the channels are converged through the switching module and then processed by the CPU, and signaling messages responded by the CPU are distributed to each channel through the switching module.

### Embodiment 2

FIG. 3 is a structure diagram of a time synchronization server provided in an embodiment of the present invention, and as shown in FIG. 3, the time synchronization server includes a primary clock board, a standby clock board and expansion boards, reference time information is transferred from the primary clock board and the standby clock board to the expansion boards through wiring within the machine frame, and a single board expansion and channel expansion function is provided for accessing a large number of users.

In the primary clock board, a GNSS or a BITS clock is used as a clock source, the clock source and a local high-precision clock are utilized to generate the reference time information, the reference time information is transferred to the expansion boards through wiring within the machine frame, and it is used as an NTP/SNTP clock to provide the reference time information for the accessing terminal via an Ethernet interface of each channel.

In the standby clock board, a GNSS or a BITS clock is used as a clock source, the clock source and a local high-precision clock are utilized to generate the reference time information, and it is used as an NTP/SNTP clock to provide the time information for the accessing terminal via an Ethernet interface of each channel and to provide the reference time information for the expansion boards when a dysfunction occurs in the primary clock board.

The expansion boards provide an NTP/SNTP time synchronization function when more users are loaded, the expansion boards only provide the single board expansion and channel expansion function, the reference time information required by the expansion boards are acquired from transferring by the primary clock board or the standby clock board through wiring within the machine frame, and it can be flexible to apply and select whether to configure the expansion boards, to configure how many expansion boards and to use what kind of machine frame to configure the expansion boards.

With respect to the primary clock board and the standby clock board, structures thereof are basically identical, and the difference between the primary clock board and the standby clock board only lies in that the standby clock board provides the reference time information to the expansion boards when an abnormity occurs in the primary clock board. With respect to the expansion boards, the difference between the expansion boards and the primary clock board or the standby clock board lies in that the primary clock board or the standby clock board includes the GNSS or BITS clock, and the GNSS or BITS clock is used as the clock source to generate the reference time information with the local high-precision clock, but the expansion boards do not include the clock source, and the reference time information of the expansion boards is basically from the primary clock board or the standby clock board, that is, the primary clock board or the standby clock board transmits the reference time information to the expansion boards through wiring within the machine frame for the expansion boards to use.

### Embodiment 3

FIG. 4 is a structure diagram of a single board in the time synchronization server provided in an embodiment of the present invention, and as shown in FIG. 4, the single board includes the above programmable logic device, and the programmable logic device is located in a physical layer.

In the single board, a CPU and Ethernet interfaces are also included, the programmable logic device is connected to a terminal via Ethernet ports, and by taking the advantage of that the CPU only processing a small amount of link establishment and communication messages, the programmable logic device and the CPU accomplish the interaction of the link establishment and communication messages, so that link establishment and communication are achieved between the CPU and the externally connected terminal. The programmable logic device includes N (N ≥ 1 and is a positive integer) channels, each channel is externally connected to the terminal via the Ethernet interfaces, so as to complete the time synchronization function of the terminal. It should be noted that the brand-new architecture provided in the embodiment 2 exists in the programmable logic device in the following ways but not limited to the following ways.

First, it may exist in each channel, that is, N architectures are included in the programmable logic device, and the architectures within all channels are identical, so that each terminal accessing the programmable logic device via the Ethernet interfaces completes corresponding functions through channels corresponding to the Ethernet interfaces of the terminal.

Second, it may be shared by all channels, that is, only one architecture is included in the programmable logic device, all Ethernet interfaces access the same architecture, thus each terminal accesses the same architecture in the programmable logic device via the Ethernet interfaces to complete corresponding functions.

Third, it may exist in M (1 <M<N, and it is a positive integer) channels, and according to the connection between Ethernet interfaces and channels having the architecture, each terminal accesses the channels having the architecture in the programmable logic device via the Ethernet interfaces to complete corresponding functions.

### Embodiment 4

Through the brand-new architecture design collaboratively processed by the programmable logic device and the CPU device, the message packet transceiving ability is totally decided by the link bandwidth of the system, and the packet transceiving ability thereof will be described through 10M/100M/1000M/10G Ethernet interfaces respectively below.
(1) If an intersystem interface is a 1000M Ethernet interface: the single-channel link bandwidth is 1000Mbps. If 1% of the bandwidth of each link is exclusively used for link establishment and communication for the signaling message, the bandwidth available for the NTP/SNTP message is 990Mbps namely 123.75MBps. If the NTP/SNTP message is based on the UDP message of the IPV4, the length of each message packet is 90Byte with the addition of an inter-frame gap 12Byte, and in consideration of the VLAN requirements of 8Byte in particular cases at the same time, messages that can be replied by each link channel per second is 123.75M/(90+12+8)=1.124*10⁶, and the ability of the single channel replying the messages per second reaches at least one million. Since the channel may be expanded to more channels (such as common 8 channels, 4 channels, 12 channels and 16 channels and so on), and with the addition of the expansion capability of the machine frame (4 single boards are expanded in a standard 1U machine frame, 8 single boards are expanded in a 2U machine frame, and 12 single boards are expanded in a 3U machine frame), the packet sending traffics per second of the apparatus of the embodiment of the present invention may reach tens or even hundreds of millions in the 1000M Ethernet interface system.
(2) If an intersystem interface is a 100M Ethernet interface: the single-channel link bandwidth is 100Mbps. If 1% of the bandwidth of each link is exclusively used for link establishment and communication for the signaling message, the bandwidth available for the NTP/SNTP message is 99Mbps namely 12.375MBps. If the NTP/SNTP message is based on the UDP message of the IPV4, the length of each message packet is 90Byte with the addition of an inter-frame gap 12Byte, and in consideration of the VLAN requirements of 8Byte in particular cases at the same time, messages that can be replied by each link channel per second is 12.375M/(90+12+8)=0.1124*10⁶, and the ability of the single channel replying the messages per second reaches at least one hundred thousand. Since the channel may be expanded to more channels (such as common 8 channels, 4 channels, 12 channels and 16 channels and so on), and with the addition of the expansion capability of the machine frame (4 single boards are expanded in a standard 1U machine frame, 8 single boards are expanded in a 2U machine frame, and 12 single boards are expanded in a 3U machine frame), the packet sending traffics per second of the apparatus of the embodiment of the present invention may reach millions or even tens of millions in the 100M Ethernet interface system.
(3) If an intersystem interface is a 10M Ethernet interface: the single-channel link bandwidth is 10Mbps. If 1% of the bandwidth of each link is exclusively used for link establishment and communication for the signaling message, the bandwidth available for the NTP/SNTP message is 9.9Mbps namely 1.2375MBps. If the NTP/SNTP message is based on the UDP message of the IPV4, the length of each message packet is 90Byte with the addition of an inter-frame gap 12Byte, and in consideration of the VLAN requirements of 8Byte in particular cases at the same time, messages that can be replied by each link channel per second is 1.2375M/(90+12+8)= 1.124*10⁴, and the ability of the single channel replying the messages per second reaches at least ten thousand. Since the channel may be expanded to more channels (such as common 8 channels, 4 channels, 12 channels and 16 channels and so on), and with the addition of the expansion capability of the machine frame (4 single boards are expanded in a standard 1U machine frame, 8 single boards are expanded in a 2U machine frame, and 12 single boards are expanded in a 3U machine frame), the packet sending traffics per second of the apparatus of the embodiment of the present invention may reach hundreds of thousands or even millions in the 10M Ethernet interface system.
(4) If an intersystem interface is a 10G Ethernet interface: the single-channel link bandwidth is 10Gbps. If 1% of the bandwidth of each link is exclusively used for link establishment and communication for the signaling message, the bandwidth available for the NTP/SNTP message is 9.9Gbps namely 1.2375GBps. If the NTP/SNTP message is based on the UDP message of the IPV4, the length of each message packet is 90Byte with the addition of an inter-frame gap 12Byte, and in consideration of the VLAN requirements of 8Byte in particular cases at the same time, messages that can be replied by each link channel per second is 1.2375G/(90+12+8)= 1.124*10⁷, and the ability of the single channel replying the messages per second reaches at least ten million. Since the channel may be expanded to more channels (such as common 8 channels, 4 channels, 12 channels and 16 channels and so on), and with the addition of the expansion capability of the machine frame (4 single boards are expanded in a standard 1U machine frame, 8 single boards are expanded in a 2U machine frame, and 12 single boards are expanded in a 3U machine frame), the packet sending traffics per second of the apparatus of the embodiment of the present invention may reach hundreds of millions or even billions in the 100M Ethernet interface system.

The receiving and sending processing of the NTP/SNTP message of the embodiments of the present invention is directly accomplished at the PHY layer, thus factors such as congestion and time delay that may occur when the application layer message is framed to the PHY layer are avoided, and the time precision is higher. Meanwhile, compared to the mode of that the CPU relying on the interrupt drive to receive and send the messages, the high-frequency response speed of the programmable logic further optimizes the NTP/SNTP synchronization performance.

Though the preferred embodiments of the present invention have been disclosed for the purpose of illustrations, the people skilled in the art will realize that various improvements, additions and replacements are also possible. Therefore, the scope of the present invention should not be limited to the above embodiments.

The ordinary person skilled in the art can understand that all or part of steps of the above embodiments can be implemented by using flows of a computer program, the computer program can be stored in a computer readable memory medium, the computer program is executed on corresponding hardware platforms (such as a system, a device, an apparatus and a component, etc.), and when the computer program is carried out, one of the steps or a combination of the steps of the method embodiments is comprised.

Alternatively, all or part of the steps of the above embodiments can also be implemented by using integrated circuits, these steps can be made into a plurality of integrated circuit modules respectively or a plurality of modules or steps therein can be made into a single integrated circuit module to be implemented. Therefore, the present invention is not limited to any combination of hardware and software in a specific form.

The devices or function modules or function units in the above embodiments can be implemented by using a universal calculating device, and they can be concentrated on a single calculating device or distributed in a network consisting of a plurality of calculating devices.

If implemented in the form of a software function module and sold or used as an independent product, the devices or function modules or function units in the above embodiments can be stored in a computer readable memory medium. The above-mentioned computer readable memory medium can be a read-only memory, a magnetic disk or an optical disk, etc.

### Industrial Applicability

In the above technical scheme, various processing processes of the time synchronization message are all performed without going through the interrupt programs of the CPU, which effectively avoids the problem of insufficient message processing capability caused by the CPU architecture limitations, thereby facilitating performing high-capacity and centralized time synchronization and greatly reducing the time synchronization costs.

## Claims

1. A time synchronization method for network devices, comprising:
a programmable logic device receiving and parsing a time synchronization message from a to-be-synchronized device in a physical layer, wherein the time synchronization message carries a synchronization parameter (S11);
the programmable logic device generating a reply message for the time synchronization message according to local reference time and update configurations of the synchronization parameter (S12); and
the programmable logic device sending the reply message and a link establishment and communication message sent to the to-be-synchronized device by a CPU to the to-be-synchronized device in a preset order (S13); **characterized in that**,
the synchronization parameter comprises a source address and a destination address of the time synchronization message;
the update configurations of the synchronization parameter comprises: update configurations of the source address and the destination address, and precision update configurations of the reference time.

2. The method according to claim 1, wherein the programmable logic device receiving and parsing a time synchronization message from a to-be-synchronized device in a physical layer (S11) comprises: the programmable logic device receiving and parsing time synchronization messages from different to-be-synchronized devices in the physical layer via at least two communication channels.

3. The method according to claim 2, wherein the programmable logic device generating a reply message for the time synchronization message according to local reference time and update configurations of the synchronization parameter (S12) comprises:
the programmable logic device generating a corresponding reply message according to the local reference time and the update configurations of the CPU to the synchronization parameter in each communication channel respectively;
the programmable logic device sending the reply message and a link establishment and communication message sent to the to-be-synchronized device by a CPU to the to-be-synchronized device in a preset order comprises:
the programmable logic device receiving the link establishment and communication message sent to the to-be-synchronized device by the CPU via each communication channel respectively; and
the programmable logic device sending the generated reply message and the received link establishment and communication message to the to-be-synchronized device in the preset order via each communication channel respectively.

4. The method according to claim 1, wherein the programmable logic device generating a reply message for the time synchronization message according to local reference time and update configurations of the synchronization parameter (S12) comprises:
the programmable logic device acquiring local reference time from a primary clock board or a standby clock board;
the programmable logic device converting the local reference time into time service reference time; and
the programmable logic device generating the reply message for the time synchronization message according to the time service reference time and the update configurations.

5. A time synchronization apparatus for network devices, comprising:
a receiving and parsing unit (20), arranged to receive and parse a time synchronization message from a to-be-synchronized device in a physical layer, wherein the time synchronization message carries a synchronization parameter;
a generation unit (22), arranged to generate a reply message for the time synchronization message according to local reference time and update configurations of the synchronization parameter; and
a sending unit (24), arranged to send the reply message and a link establishment and communication message sent to the to-be-synchronized device by a CPU to the to-be-synchronized device in a preset order; **characterized in that**,
the synchronization parameter comprises a source address and a destination address of the time synchronization message;
the generation unit (22) is further arranged to: update configurations of the source address and the destination address, and precision update configurations of the reference time.

6. The apparatus according to claim 5, wherein the receiving and parsing unit (20) is arranged to receive and parse time synchronization messages from different to-be-synchronized devices in the physical layer via at least two communication channels.

7. The apparatus according to claim 6, wherein the generation unit (22) is arranged to generate the reply message of the time synchronization message via the at least two communication channels according to the local reference time and the update configurations of the CPU to the synchronization parameter;
the sending unit (24) comprises:
a receiving module, arranged to receive the link establishment and communication message sent to the to-be-synchronized device by the CPU via each communication channel respectively; and
a sending module, arranged to send the generated reply message and the received link establishment and communication message to the to-be-synchronized device in the preset order via each communication channel respectively.

8. The apparatus according to claim 5, wherein the generation unit (22) comprises:
an acquisition module, arranged to acquire local reference time from a primary clock board or a standby clock board;
a conversion module, arranged to convert the local reference time into time service reference time; and
a generation module, arranged to generate the reply message for the time synchronization message according to the time service reference time and the update configurations.

9. A time synchronization server, comprising a primary clock board, a standby clock board and at least one expansion board, wherein the primary clock board, the standby clock board and the expansion board all include a CPU and the time synchronization apparatus according to any one of claims 5 to 8.

10. A computer program, comprising program instructions, wherein when the program instructions are executed by a programmable logic device, cause the programmable logic device to perform the method according to any one of claims 1 to 4.

11. A carrier medium carrying the computer program according to claim 10.

## Patentansprüche

1. Zeitsynchronisationsverfahren für Netzwerkvorrichtungen, aufweisend:
eine programmierbare Logikvorrichtung, die eine Zeitsynchronisationsnachricht von einer zu synchronisierenden Vorrichtung in einer physischen Schicht empfängt und analysiert, wobei die Zeitsynchronisationsnachricht einen Synchronisationsparameter (S11) trägt;
wobei die programmierbare Logikvorrichtung eine Antwortnachricht für die Zeitsynchronisationsnachricht gemäß lokaler Referenzzeit und Aktualisierungskonfigurationen des Synchronisationsparameters (S12) generiert; und
wobei die programmierbare Logikvorrichtung die Antwortnachricht und eine Verbindungsaufbau- und Kommunikationsnachricht, die an die zu synchronisierende Vorrichtung gesendet wurde, durch eine CPU in einer voreingestellten Reihenfolge (S13) an die zu synchronisierende Vorrichtung sendet; **dadurch gekennzeichnet, dass**
der Synchronisationsparameter eine Quelladresse und eine Zieladresse der Zeitsynchronisationsnachricht aufweist;
wobei die Aktualisierungskonfigurationen des Synchronisationsparameters aufweisen: Aktualisierungskonfigurationen der Quelladresse und der Zieladresse und Präzisions-Aktualisierungskonfigurationen der Referenzzeit.

2. Verfahren nach Anspruch 1, wobei die programmierbare Logikvorrichtung, die eine Zeitsynchronisationsnachricht von einer zu synchronisierenden Vorrichtung in einer physischen Schicht (S11) empfängt und analysiert, aufweist:
die programmierbare Logikvorrichtung, die Zeitsynchronisationsnachrichten von verschiedenen zu synchronisierenden Vorrichtungen in der physischen Schicht über mindestens zwei Kommunikationskanäle empfängt und analysiert.

3. Verfahren nach Anspruch 2, wobei die programmierbare Logikvorrichtung, die eine Antwortnachricht für die Zeitsynchronisationsnachricht gemäß lokaler Referenzzeit und Aktualisierungskonfigurationen des Synchronisationsparameters (S12) generiert, aufweist:
die programmierbare Logikvorrichtung, die eine entsprechende Antwortnachricht gemäß der lokalen Referenzzeit und den Aktualisierungskonfigurationen der CPU jeweils für den Synchronisationsparameter in jedem Kommunikationskanal generiert;
wobei die programmierbare Logikvorrichtung, die die Antwortnachricht und eine Verbindungsaufbau- und Kommunikationsnachricht, die an die zu synchronisierende Vorrichtung gesendet wurde, durch eine CPU in einer voreingestellten Reihenfolge an die zu synchronisierende Vorrichtung sendet, aufweist:
die programmierbare Logikvorrichtung, die die Verbindungsaufbau- und Kommunikationsnachricht, die an die zu synchronisierende Vorrichtung gesendet wurde, jeweils über jeden Kommunikationskanal durch die CPU empfängt; und
die programmierbare Logikvorrichtung, die die generierte Antwortnachricht und die empfangene Verbindungsaufbau- und Kommunikationsnachricht in der voreingestellten Reihenfolge jeweils über jeden Kommunikationskanal an die zu synchronisierende Vorrichtung sendet.

4. Verfahren nach Anspruch 1, wobei die programmierbare Logikvorrichtung, die eine Antwortnachricht für die Zeitsynchronisationsnachricht gemäß lokaler Referenzzeit und Aktualisierungskonfigurationen des Synchronisationsparameters (S12) generiert, aufweist:
die programmierbare Logikvorrichtung, die lokale Referenzzeit von einer primären Taktgeberkarte oder einer Standby-Taktgeberkarte erfasst;
die programmierbare Logikvorrichtung, die die lokale Referenzzeit in Zeitdienst-Referenzzeit umwandelt; und
die programmierbare Logikvorrichtung, die die Antwortnachricht für die Zeitsynchronisationsnachricht gemäß der Zeitdienst-Referenzzeit und den Aktualisierungskonfigurationen generiert.

5. Zeitsynchronisationsvorrichtung für Netzwerkvorrichtungen, aufweisend:
eine empfangende und analysierende Einheit (20), die angeordnet ist, um eine Zeitsynchronisationsnachricht von einer zu synchronisierenden Vorrichtung in einer physischen Schicht zu empfangen und zu analysieren, wobei die Zeitsynchronisationsnachricht einen Synchronisationsparameter trägt;
eine Generierungseinheit (22), die angeordnet ist, um eine Antwortnachricht für die Zeitsynchronisationsnachricht gemäß lokaler Referenzzeit und Aktualisierungskonfigurationen des Synchronisationsparameters zu generieren; und
eine sendende Einheit (24). die angeordnet ist, um die Antwortnachricht und eine Verbindungsaufbau- und Kommunikationsnachricht, die an die zu synchronisierende Vorrichtung gesendet wurde, durch eine CPU in einer voreingestellten Reihenfolge an die zu synchronisierende Vorrichtung zu senden, **dadurch gekennzeichnet, dass**
der Synchronisationsparameter eine Quelladresse und eine Zieladresse der Zeitsynchronisationsnachricht aufweist;
wobei die Generierungseinheit (22) ferner konfiguriert ist zum: Aktualisieren von Konfigurationen der Quelladresse und der Zieladresse und Präzisions-Aktualisierungskonfigurationen der Referenzzeit.

6. Vorrichtung nach Anspruch 5, wobei die empfangende und analysierende Einheit (20) angeordnet ist, um eine Zeitsynchronisationsnachrichten von verschiedenen zu synchronisierenden Vorrichtungen in der physischen Schicht über mindestens zwei Kommunikationskanäle zu empfangen und zu analysieren.

7. Vorrichtung nach Anspruch 6, wobei die Generierungseinheit (22) angeordnet ist, um die Antwortnachricht der Zeitsynchronisierungsnachricht über die mindestens zwei Kommunikationskanäle gemäß der lokalen Referenzzeit und den Aktualisierungskonfigurationen der CPU für den Synchronisationsparameter zu generieren;
wobei die sendende Einheit (24) aufweist:
ein empfangendes Modul, das angeordnet ist, um die Verbindungsaufbau- und Kommunikationsnachricht, die an die zu synchronisierende Vorrichtung gesendet wurde, durch die CPU jeweils über jeden Kommunikationskanal zu empfangen; und
ein sendendes Modul, das angeordnet ist, um die generierte Antwortnachricht und die empfangene Verbindungsaufbau- und Kommunikationsnachricht in der voreingestellten Reihenfolge jeweils über jeden Kommunikationskanal an die zu synchronisierende Vorrichtung zu senden.

8. Vorrichtung nach Anspruch 5, wobei die Generierungseinheit (22) aufweist:
ein Erfassungsmodul, das angeordnet ist, um lokale Referenzzeit von einer primären Taktgeberkarte oder einer Standby-Taktgeberkarte zu erfassen;
ein Umwandlungsmodul, das angeordnet ist, um die lokale Referenzzeit in Zeitdienst-Referenzzeit umzuwandeln; und
ein Generierungsmodul, das angeordnet ist, um die Antwortnachricht für die Zeitsynchronisationsnachricht gemäß der Zeitdienst-Referenzzeit und den Aktualisierungskonfigurationen zu generieren.

9. Zeitsynchronisationsserver, aufweisend eine primäre Taktgeberkarte, eine Standby-Taktgeberkarte und mindestens eine Erweiterungskarte, wobei die primäre Taktgeberkarte, die Standby-Taktgeberkarte und die Erweiterungskarte alle eine CPU und die Zeitsynchronisationsvorrichtung nach einem der Ansprüche 5 bis 8 enthalten.

10. Computerprogramm, aufweisend Programmanweisungen, wobei, wenn die Programmanweisungen durch eine programmierbare Logikvorrichtung ausgeführt werden, sie die programmierbare Logikvorrichtung veranlassen, das Verfahren nach einem der Ansprüche 1 bis 4 auszuführen.

11. Trägermedium, welches das Computerprogramm nach Anspruch 10 trägt.

## Revendications

1. Procédé de synchronisation temporelle pour des dispositifs réseau, comprenant :
un dispositif de logique programmable recevant et analysant, dans une couche physique, un message de synchronisation temporelle en provenance d'un dispositif à synchroniser, ledit message de synchronisation temporelle contenant un paramètre de synchronisation (S11) ;
ledit dispositif de logique programmable générant un message de réponse pour le message de synchronisation temporelle selon l'heure de référence locale et des configurations de mise à jour du paramètre de synchronisation (S12) ; et
ledit dispositif de logique programmable envoyant le message de réponse et un message d'établissement de liaison et de communication envoyé au dispositif à synchroniser par une unité centrale (CPU) au dispositif à synchroniser dans une séquence prédéfinie (S13) ; **caractérisé en ce que**, le paramètre de synchronisation comprend une adresse source et une adresse de destination du message de synchronisation temporelle ;
lesdites configurations de mise à jour du paramètre de synchronisation comprenant : des configurations de mise à jour de l'adresse source et de l'adresse de destination et des configurations de mise à jour de précision de l'heure de référence.

2. Procédé selon la revendication 1, ledit dispositif de logique programmable recevant et analysant, dans une couche physique (S11), un message de synchronisation temporelle provenant d'un dispositif à synchroniser comprenant:
le dispositif de logique programmable recevant et analysant, dans une couche physique, des messages de synchronisation temporelle provenant de dispositifs à synchroniser différents par l'intermédiaire d'au moins deux canaux de communication.

3. Procédé selon la revendication 2, ledit dispositif de logique programmable générant un message de réponse pour le message de synchronisation temporelle selon une heure de référence locale et des configurations de mise à jour du paramètre de synchronisation (S12) comprenant :
le dispositif de logique programmable générant un message de réponse correspondant selon l'heure de référence locale et les configurations de mise à jour du CPU pour le paramètre de synchronisation dans chaque canal de communication respectivement ;
ledit dispositif de logique programmable envoyant le message de réponse et un message d'établissement de liaison et de communication envoyé au dispositif à synchroniser par un CPU au dispositif à synchroniser dans une séquence prédéfinie comprenant :
le dispositif de logique programmable recevant le message d'établissement de liaison et de communication envoyé au dispositif à synchroniser par le CPU par l'intermédiaire de chaque canal de communication respectivement ;
le dispositif de logique programmable envoyant le message de réponse généré et le message d'établissement de liaison et de communication reçu au dispositif à synchroniser dans la séquence prédéfinie par l'intermédiaire de chaque canal de communication respectivement.

4. Procédé selon la revendication 1, ledit dispositif de logique programmable générant un message de réponse pour le message de synchronisation temporelle selon l'heure de référence locale et des configurations de mise à jour du paramètre de synchronisation (S12) comprenant :
le dispositif de logique programmable, acquérant l'heure de référence locale provenant d'une carte d'horloge principale ou d'une carte d'horloge de veille ;
le dispositif de logique programmable convertissant l'heure de référence locale en heure de référence de service temporel ; et
le dispositif de logique programmable générant le message de réponse pour le message de synchronisation temporelle selon l'heure de référence de service temporel et les configurations de mise à jour.

5. Appareil de synchronisation temporelle pour des dispositifs réseau, comprenant :
une unité de réception et d'analyse (20) agencée pour recevoir et analyser, dans une couche physique, un message de synchronisation temporelle provenant d'un dispositif à synchroniser, ledit message de synchronisation temporelle contenant un paramètre de synchronisation ;
une unité de génération (22) agencée pour générer un message de réponse pour le message de synchronisation temporelle selon l'heure de référence locale et les configurations de mise à jour du paramètre de synchronisation ; et
une unité d'envoi (24) agencée pour envoyer le message de réponse et un message d'établissement de liaison et de communication envoyé au dispositif à synchroniser par un CPU au dispositif à synchroniser dans une séquence prédéfinie ; **caractérisé en ce que** :
le paramètre de synchronisation comprend une adresse source et une adresse de destination du message de synchronisation temporelle ;
ladite unité de génération (22) étant agencée en outre pour : mettre à jour les configurations de l'adresse source et de l'adresse de destination, et mettre à jour de manière précise des configurations de l'heure de référence.

6. Appareil selon la revendication 5, ladite unité de réception et d'analyse (20) étant agencée pour recevoir et analyser, dans la couche physique, des messages de synchronisation temporelle provenant de différents dispositifs à synchroniser par l'intermédiaire d'au moins deux canaux de communication.

7. Appareil selon la revendication 6, ladite unité de génération (22) étant agencée pour générer le message de réponse du message de synchronisation temporelle par l'intermédiaire d'au moins deux canaux de communication selon l'heure de référence locale et des configurations de mise à jour du CPU pour le paramètre de synchronisation ;
l'unité d'envoi (24) comprenant :
un module de réception, agencé pour recevoir le message d'établissement de liaison et de communication envoyé au dispositif à synchroniser par le CPU par l'intermédiaire de chaque canal de communication respectivement ; et
un module d'envoi, agencé pour envoyer le message de réponse généré et le message d'établissement de liaison et de communication reçu au dispositif à synchroniser dans la séquence prédéfinie respectivement par l'intermédiaire de chaque canal de communication.

8. Appareil selon la revendication 5, ladite unité de génération (22) comprenant :
un module d'acquisition, agencé pour acquérir l'heure de référence locale provenant d'une carte d'horloge principale ou d'une d'une carte d'horloge de veille ;
un module de conversion agencé pour convertir l'heure de référence locale en heure de référence de service temporel ; et
un module de génération agencé pour générer le message de réponse pour le message de synchronisation temporel selon l'heure de référence de service temporel et les configurations de mise à jour.

9. Serveur de synchronisation temporelle, comprenant une carte d'horloge principale, une carte d'horloge de veille et au moins une carte d'extension, ladite carte d'horloge principale, ladite carte d'horloge de veille et ladite carte d'extension comprenant toutes un CPU et l'appareil de synchronisation temporelle selon l'une quelconque des revendications 5 à 8.

10. Programme informatique, comprenant des instructions de programme amenant le dispositif de logique programmable à effectuer le procédé selon l'une quelconque des revendications 1 à 4 lorsque les instructions de programme sont exécutées par un dispositif de logique programmable.

11. Milieu de support contenant le programme informatique selon la revendication 10.
